**Europäisches Patentamt**

**European Patent Office**

**Office européen des brevets**

(19)

(11) **EP 1 181 754 B1**

(12) **EUROPÄISCHE PATENTSCHRIFT**

(45) Veröffentlichungstag und Bekanntmachung des Hinweises auf die Patenterteilung:
**19.03.2003 Patentblatt 2003/12**

(21) Anmeldenummer: **00935156.0**

(22) Anmeldetag: **31.05.2000**

(51) Int Cl.⁷: **H01S 3/23**

(86) Internationale Anmeldenummer:
**PCT/EP00/04998**

(87) Internationale Veröffentlichungsnummer:
**WO 00/074185 (07.12.2000 Gazette 2000/49)**

(54) **OPTISCHE VERSTÄRKER-ANORDNUNG FÜR FESTKÖRPERLASER**

OPTICAL AMPLIFIER ARRANGEMENT FOR A SOLID STATE LASER

ENSEMBLE AMPLIFICATEUR OPTIQUE POUR LASER SOLIDE

(84) Benannte Vertragsstaaten:
**DE FR GB**

(30) Priorität: **01.06.1999 DE 19925258**
**25.05.2000 DE 10025874**

(43) Veröffentlichungstag der Anmeldung:
**27.02.2002 Patentblatt 2002/09**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
• **DU, Keming**
**D-52078 Aachen (DE)**
• **LOOSEN, Peter**
**D-52076 Aachen-Kornelimünster (DE)**
• **POPRAWE, Reinhart**
**D-52074 Aachen (DE)**

(56) Entgegenhaltungen:
**EP-A- 0 572 201       DE-A- 19 609 851**
**US-A- 5 021 742**

**Beschreibung**

Die vorliegende Erfindung betrifft eine optische Verstärker-Anordnung, die insbesondere geeignet ist, einen von einer Laserquelle bzw. einem Oszillator ausgestrahlten Laserstrahl mit einem hohen Verstärkungsfaktor zu verstärken.

Im allgemeinen ist die erzielbare Ausgangsleistung von Lasern, insbesondere Festkörperlasern, bei hoher Strahlqualität durch die thermische Linsenwirkung des Verstärkungsmediums begrenzt. Um eine hohe Laserleistung bei hoher Strahlqualität zu erzielen, wird bislang eine Oszillator-Verstärker-Anordnung verwendet. Dabei ist der Oszillator derart ausgelegt, daß er einen Laserstrahl mit hoher Strahlqualität und relativ geringer Leistung abgibt. Der vom Oszillator abgegebene Laserstrahl wird darauf hin in den nachgeschalteten Verstärker eingestrahlt und verstärkt, so daß sich unter Beibehaltung der Strahlqualität eine hohe Strahlleistung ergibt.

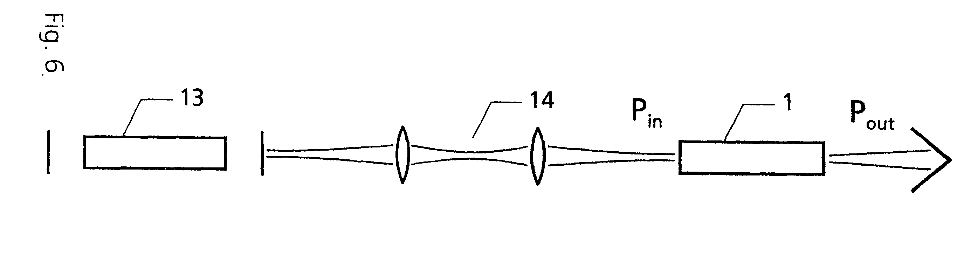

Eine derartige Anordnung mit nachgeschaltetem Verstärker ist beispielsweise in Fig. 6 gezeigt. In Fig. 6 bezeichnet Bezugszeichen 1 einen optischen Verstärker,

Bezugszeichen 13 bezeichnet einen Oszillator und Bezugszeichen 14 bezeichnet die optischen Komponenten, mit denen die optische Abbildung realisiert wird.

Bei der in Fig. 6 gezeigten Anordnung handelt es sich um eine Laseranordnung, bei der sowohl der Oszillator als auch der Verstärker ein stabförmiges Festkörpermedium aufweisen. Aufgrund der verfügbaren Verstärkung, die nicht zuletzt durch die verstärkte Spontanemission und parasitäre Oszillation beschränkt ist, beträgt der typische Verstärkungsfaktor bei einem Verstärker dieser Art etwa 1,2 bis 3 pro Umlauf.

Bei einem schwachen Oszillator ist dieser Verstärkungsfaktor oft zu gering, um eine effiziente Ausnutzung des Verstärkungsmediums zu erzielen.

Eine Möglichkeit, dieses Problem zu lösen, besteht in einer regenerativen Verstärker-Anordnung, bei der das Verstärkungsmedium in einem Resonator mit einer Pockels-Zelle und einem Polarisator (regenerativer Resonator) eingebaut ist. Der zu verstärkende Laserstrahl wird durch die Pockels-Zelle und den Polarisator in den regenerativen Resonator eingekoppelt. Nach mehreren Umläufen durch das Vestärkungsmedium ist der Laserstrahl mehrfach verstärkt, und er wird zum Schluß wieder durch die Pockels-Zelle und den Polarisator aus dem regenerativen Resonator ausgekoppelt. Dadurch wird zwar eine effiziente Verstärkung ermöglicht, die beschriebene Realisierung ist jedoch sehr aufwändig und beschränkt anwendbar für Laserpulse kürzer als einige 10 ps.

Zur weiteren Steigerung der Laserleistung können mehrere Verstärkerstufen verwendet werden. Solche mehrstufigen Verstärker-Anordnungen sind immer mit hohen Kosten verbunden. Darüber hinaus sind sie sehr voluminös und weisen einen hohen Platzbedarf auf, und sie sind wenig zuverlässig.

Zur Erhöhung des Verstärkungsfaktors wird in der US-Patentschrift Nr. 4 703 491 eine Laseranordnung mit einem teilweise durchlässigen Auskoppelspiegel und einem vollständig reflektierenden Falt-Spiegel auf einer Seite des aktiven Lasermediums und einem weiteren vollständig reflektierenden Falt-Spiegel auf der anderen Seite des aktiven Lasermediums vorgeschlagen. Das optische System ist derart gestaltet, daß ein Laserstrahl mehrfach durch das aktive Lasermedium hindurchläuft, so daß eine lange effektive Resonatorlänge erhalten wird. Bei dieser Anordnung läuft der Strahl nach Mehrfachfaltung bzw. Multipass in sich zurück.

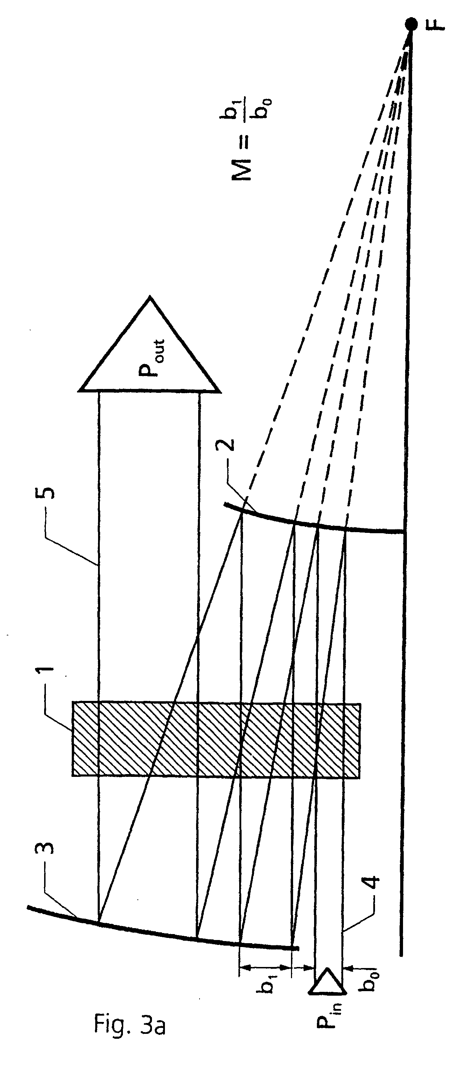

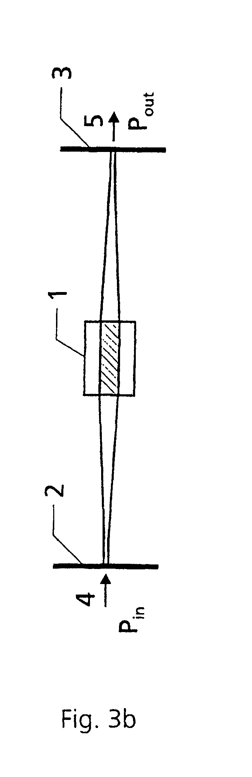

In der DE-A-196 09 851 wird darüber hinaus ein Bandleiterlaser beschrieben, mit einem fast vollständig reflektierenden Endspiegel, einem teilweise reflektierenden Auskoppelspiegel, die auf jeweils unterschiedlichen Seiten des aktiven Lasermediums angeordnet sind, sowie zwei zu den Stirnflächen des Resonators geneigten Faltspiegeln auf beiden Seiten des aktiven Lasermediums. Durch diese Anordnung wird ein Multipass-Resonator realisiert. Wie insbesondere in Fig. 3 gezeigt ist, hat einer der Faltspiegel eine konkav gekrümmte Spiegelfläche. wodurch der Strahlquerschnitt des Laserstrahls in einer Durchlaufrichtung aufgeweitet wird. In der umgekehrten Durchlaufrichtung wird der Strahlquerschnitt des Laserstrahls jedoch wieder verringert. Dies führt zu einer erhöhten Belastung der optischen Komponenten innerhalb des Resonators. Beim Durchgang vom Auskoppelspiegel zum vollständig reflektierenden Endspiegel nimmt nämlich infolge des sich verkleinernden Strahlquerschnitts die Leistungsdichte drastisch zu, was hinsichtlich der effektiven Ausnutzung des Verstärkungsmediums und der Belastung der optischen Komponenten ungünstig ist.

In der US 5,021,742 ist ein Laser-Verstärker mit einem rechtwinkligen Verstärkungsmedium vorgestellt. Durch Spiegel wird erreicht, dass der zu verstärkende Strahl mehrfach das Verstärkungsmedium durchstrahlt. Dabei erhöht sich der Querschnitt des Strahls bei jedem Durchgang. Durch die Erhöhung des Strahlquerschnitts wird die Verstärkung ausgeglichen, so dass die Intensität des Strahls im wesentlichen konstant bleibt. Allerdings ist die Ausnutzung des Verstärkungsmediums nicht optimal.

Der vorliegenden Erfindung liegt somit die Aufgabe zugrunde, eine optische Verstärker-Anordnung zu schaffen, bei der die Nachteile des Stands der Technik beseitigt sind.

Gemäß der vorliegenden Erfindung wird die Aufgabe durch den Gegenstand von Anspruch 1 gelöst.

Die vorliegende Erfindung schafft somit eine optische Verstärker-Anordnung, mit einem Verstärkungsmedium, welches einen näherungsweise rechteckigen Querschnitt mit einer langen Kante und einer kurzen Kante aufweist, sowie mindestens zwei hochreflektierenden Spiegeln, zwischen denen das Verstärkungsmedium angeordnet ist, wobei die lange bzw. die kurze Kante des Querschnitts entlang der x-Achse bzw. der y-Achse steht, die z-Achse die optische Achse ist und die x-, y- und z-Achse ein rechtwinkliges Koordinatensystem bilden, die Spiegel derart gestaltet und angeordnet sind, daß ein von einem Oszillator eingestrahlter zu verstärkender Strahl in der xz-Ebene mehrfach durch das Verstärkungsmedium durchläuft und verstärkt wird, und die Abmessung des zu verstärkenden Strahls in der x-Richtung nach jedem Durchgang größer wird.

Die bevorzugten Ausführungsformen sind Gegenstand der Unteransprüche.

Die vorliegende Erfindung wird nachfolgend unter Bezugnahme auf die bevorzugten Ausführungsformen detaillierter beschrieben.

Fig. 1a zeigt eine erste Ausführungsform der vorliegenden Erfindung im Querschnitt in der xz-Ebene;
Fig. 1b zeigt die erste Ausführungsform der vorliegenden Erfindung im Querschnitt in der yz-Ebene;
Fig. 1c zeigt das Verstärkungsmedium im Querschnitt in der xy-Ebene;
Fig. 2 zeigt die schematische Aufweitung des zu verstärkenden Strahls gemäß einer zweiten Ausführungsform;
Fig. 3a zeigt eine dritte Ausführungsform der vorliegenden Erfindung im Querschnitt in der xz-Ebene;
Fig. 3b zeigt die dritte Ausführungsform der vorliegenden Erfindung im Querschnitt in der yz-Ebene;
Fig. 4 zeigt ein Festkörper-Verstärkungsmedium, das entlang der y-Richtung einen dotierten Mittelbereich und zwei undotierte Randbereiche aufweist;
Fig. 5 zeigt eine Verstärker-Anordnung gemäß einer weiteren Ausführungsform der vorliegenden Erfindung; und
Fig. 6 zeigt eine herkömmliche Verstärker-Anordnung.

Die Elemente in der optischen Verstärker-Anordnung gemäß der vorliegenden Erfindung sind ein slabförmiges Verstärkungsmedium sowie zwei speziell ausgelegte und angeordnete hochreflektierende Spiegel, zwischen denen das Verstärkungsmedium angeordnet ist. Die Vorteile des slabförmigen Verstärkungsmediums ist die quasi eindimensionale Wärmeleitung und eine eindimensionale Linsenwirkung, was bei einem Festkörpermedium eine Minimierung der Depolarisationsverluste bedeutet.

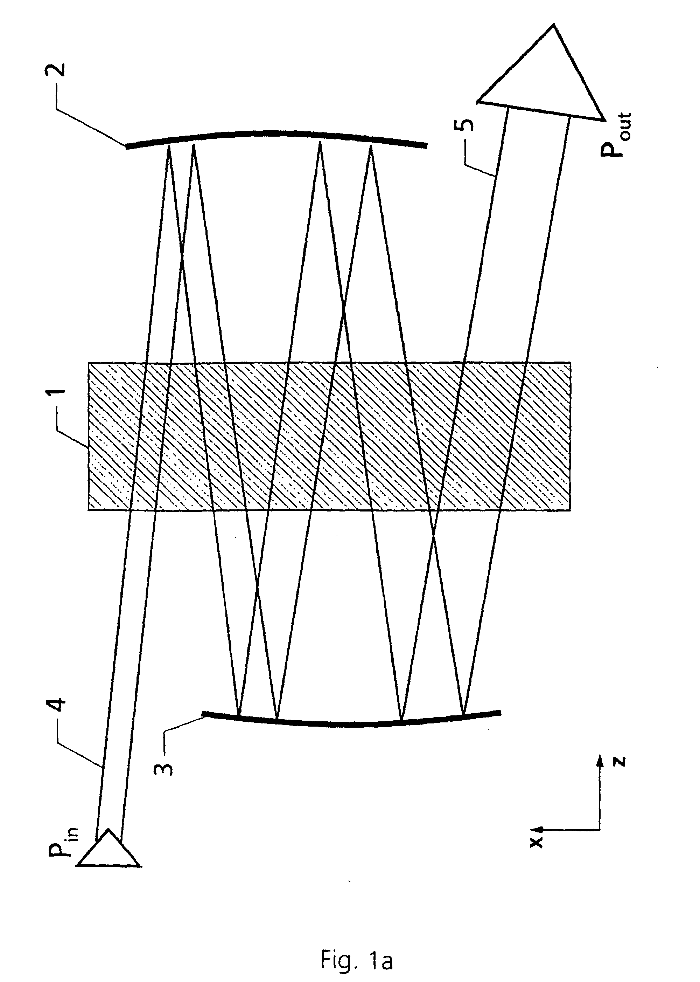

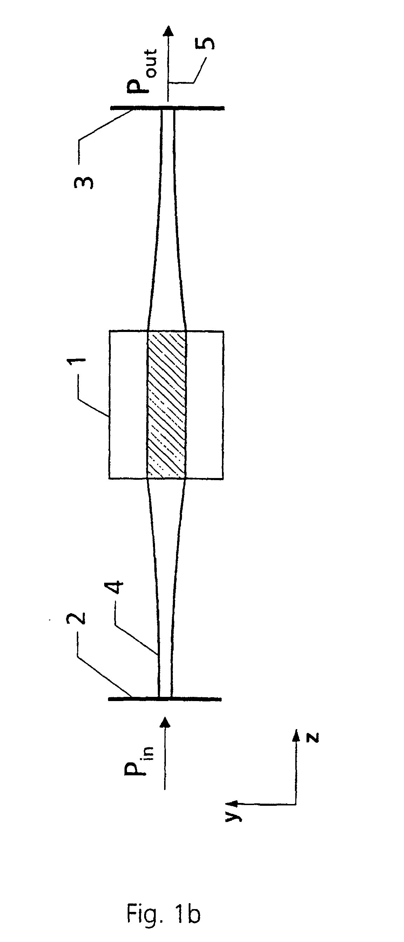

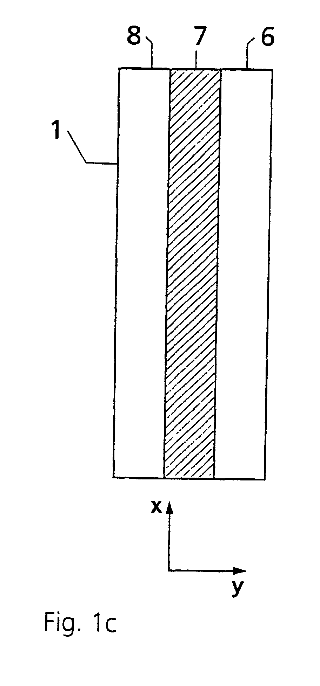

In Fig. 1 bezeichnet Bezugszeichen 1 das Verstärkungsmedium mit einem näherungsweise rechteckigen Querschnitt. Das Verstärkungsmedium ist zwischen mindestens zwei hochreflektierenden Spiegeln 2, 3 angeordnet. Zur Vereinfachung der Darstellung wird ein rechtwinkliges Koordinatensystem eingeführt. Die x-Achse bzw. y-Achse steht dabei parallel zur langen bzw. kurzen Kante des Querschnitts, und die z-Achse steht parallel zur optischen Achse. Ein nicht dargestellter Oszillator gibt einen Laserstrahl mit hoher Strahlqualität und relativ geringer Leistung ab. Der zu verstärkende Strahl 4 aus dem Oszillator (Eingangsstrahl) wird im wesentlichen parallel zur optischen Achse in das Verstärkungsmedium eingestrahlt. Durch eine geeignete Auslegung der beiden Spiegel läuft der Strahl im wesentlichen in der xz-Ebene zwischen den Spiegeln mehrfach durch das Verstärkungsmedium hin und her. Dadurch wird der Strahl mehrfach verstärkt.

Durch diese Anordnung wird sichergestellt, daß einerseits die hohe Strahlqualität des verstärkten Strahls nicht beeinträchtigt wird, andererseits ein hoher Verstärkungsfaktor realisiert wird.

Gemäß der vorliegenden Erfindung ist die optische Verstärker-Anordnung, vorzugsweise die beiden Spiegel, so ausgelegt, daß die Abmessung des Ausgangsstrahls in der x-Richtung größer wird als die des Eingangsstrahls. Dadurch kann bei einer Verstärkung des durchlaufenden Strahls eine annähernd gleichbleibende Leistungsdichte erreicht werden.

Dies ist hinsichtlich des Sättigungsverhaltens der Verstärkung und zur Reduzierung der Intensität auf den optischen Komponenten, insbesondere dem Verstärkungsmedium, vorteilhaft.

Ein effizienter Betrieb des Verstärkers setzt nämlich voraus, daß die Laserintensität mit der Sättigungsintensität des Lasermediums vergleichbar ist. Dies bedeutet, daß bei einer Zunahme der Laserleistung der Querschnitt des Laserstrahls entsprechend vergrößert werden muß. Die effektivste Ausnutzung der Verstärkung wird erreicht, indem die Abmessung des Strahls in der x-Richtung nach jedem Durchgang, vorzugsweise mit einem konstanten Faktor M größer wird.

Der Faktor M ist eine Funktion der Klein-Signal-Verstärkung und der Intensität des Eingangsstrahls in Relation zur Sättigungsintensität. Für die Verstärkung von cw- bzw. qcw-Lasern ist der Faktor M gegeben durch:

$$M \approx 1 + (I_s/I_{in}) \cdot g_0\ell$$

worin $I_{in}$ die Intensität des Eingangsstrahls, $I_s$ die Sättigungsintensität des Verstärkungsmediums und $g_0\ell$ die gesamte Klein-Signal-Verstärkung pro Umlauf bezeichnet.

Für einen gepulsten Laser ist der optimale Faktor M gegeben durch:

$$M \approx 1 + (E_s/E_{in}) \cdot g_0\ell$$

worin $E_{in}$ die Energieflußdichte des Eingangsstrahls, $E_s$ die Sättigungs-Energieflußdichte des Verstärkungsmediums und $g_0\ell$ die gesamte Klein-Signal-Verstärkung pro Umlauf bezeichnet.

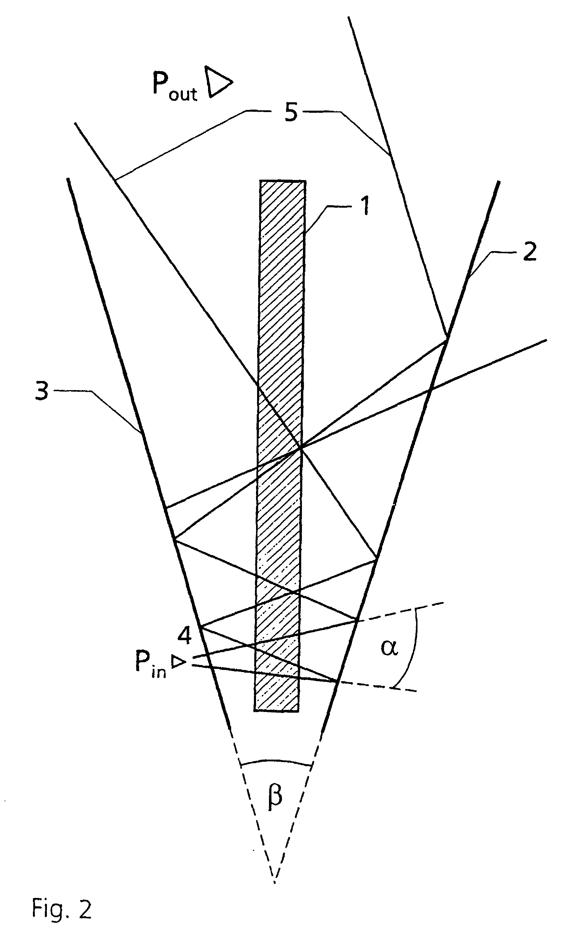

Eine besonders einfache Verstärker-Anordnung ist in Fig. 2 gezeigt. Diese wird realisiert, indem zwei plane Spiegel verwendet werden. Die beiden planen Spiegel werden unter einem Winkel β zueinander angeordnet, der etwa dem Volldivergenzwinkel α des Eingangsstrahls gleich ist. Der Winkel α wird für eine effiziente Verstärkung im wesentlichen durch die Klein-Signal-Verstärkung, die Sättigungsintensität, die Leistung des Eingangsstrahls und den Abstand zwischen den beiden Spiegeln definiert.

Eine weitere bevorzugte Ausführungsform ist in Fig. 3a gezeigt. Bei dieser Ausführungsform sind die beiden Spiegel 2, 3 so ausgelegt und angeordnet, daß sie eine Art Hybrid-Resonator bilden, der in der xz-Ebene instabil und in der yz-Ebene stabil ist. Der Eingangsstrahl 4 wird off-axis in den Resonator eingekoppelt.

Zur Stabilisierung des optischen Resonators in der yz-Ebene können eine oder mehrere zylindrische Linse(n) verwendet werden .

Bei dieser Ausführungsform, die übrigens auch in einer allgemeineren optischen Verstärker-Anordnung gemäß Patentanspruch 1, bei der die Abmessung des zu verstärkenden Strahls in der x-Richtung jedoch nicht nach jedem Durchgang größer wird, realisiert werden kann, sind die beiden Spiegel 2, 3 zylindrisch mit Krümmungen in der xy-Ebene ausgebildet. In der yz-Ebene ist der Resonator aufgrund der thermischen Linsenwirkung in dieser Ebene stabil.

Vorteilhaft bei dieser Ausführungsform ist, daß weniger optische Komponenten verwendet werden müssen und der Justieraufwand für die optische Verstärker-Anordnung verringert wird.

Es ist weiterhin vorteilhaft, wenn das Verstärkungsmedium so beschaffen ist, daß es eine wellenleitende Funktion mindestens in der y-Richtung aufweist.

In einem konfokalen instabilen Resonator können insbesondere einfache Strahlengänge realisiert werden. Bei diesem Resonator liegen, wie in Fig. 3a gezeigt, die Fokii der beiden Spiegel 2, 3 gemeinsam auf einem Punkt F. Zur Vermeidung der möglichen Zerstörung von optischen Komponenten ist es vorteilhaft, den gemeinsamen Brennpunkt an eine Stelle außerhalb des Resonators zu legen.

Eine konstante Abmessung des Strahls innerhalb des Verstärkungsmediums 1 in der y-Richtung ist vorteilhaft hinsichtlich der Effizienz und Strahlqualität. Dies kann erreicht werden, indem der Eingangsstrahl 4 hinsichtlich des Radius und der Position der Strahltaille an die transversalen Moden des stabilen Resonators angepaßt wird. Für den Fall, daß die beiden Spiegel in der y-Richtung gerade sind, soll die Strahltaille des Eingangsstrahls 4 an der Position des zum Oszillator gewandten Spiegels 2 liegen. Der Radius der Strahltaille in der yz-Ebene wird unter Berücksichtigung der Linsenwirkung des Verstärkungsmediums 1 so definiert, daß nach dem Durchgang durch das Verstärkungsmedium in der yz-Ebene eine weitere Strahltaille an der Position des vom Oszillator abgewandten Spiegels 3 entsteht. Dies ist in Fig. 3b veranschaulicht.

In der xz-Ebene kann eine Art Linsenleitung mit einer konstanten Aufweitung realisiert werden, indem die Strahltaille des Eingangsstrahls in dieser Ebene auf den gemeinsamen Brennpunkt F der beiden Spiegel 2, 3 gelegt wird.

Insgesamt werden mit der erfindungsgemäßen optischen Verstärker-Anordnung Verstärkungsfaktoren zwischen 10 und ungefähr 1000 erzielt.

Als Verstärkungsmedium können alle laserfähigen Medien wie beispielsweise Gas- oder Excimer-, Halbleiter- oder Festkörpermedien sein, bei denen die Besetzungsinversion durch jeweils Gasentladung, Strominjektion oder optisches Pumpen erfolgt.

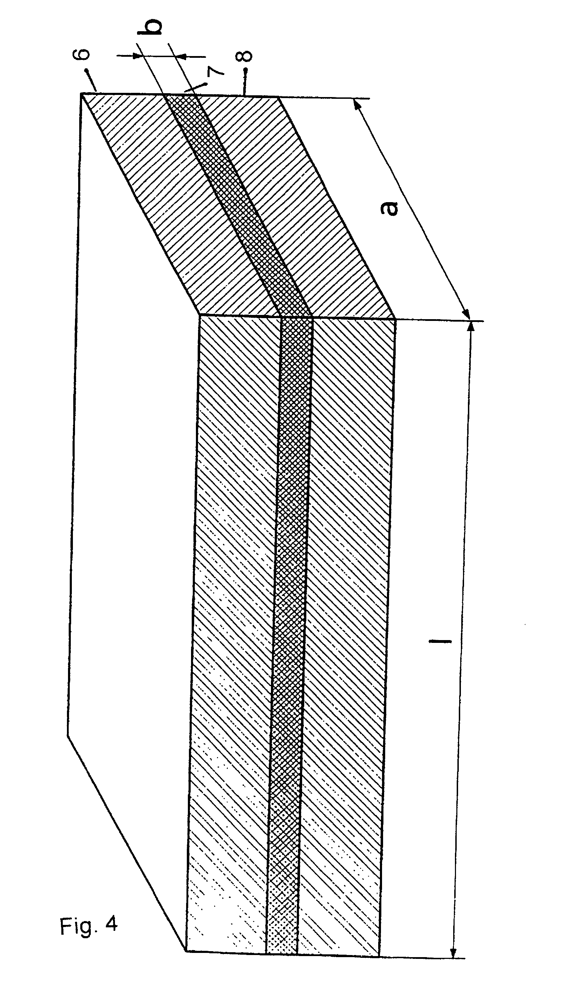

Wird für die erfindungsgemäße optische Verstärker-Anordnung ein Festkörper als Verstärkungsmedium verwendet, so ist es hinsichtlich des thermischen Verhaltens vorteilhaft, eine Sandwich-Struktur in der y-Richtung und/oder in der z-Richtung zu verwenden. Dabei hat der Festkörper in der y-Richtung und/oder in der z-Richtung mindestens einen dotierten Mittelbereich 7 sowie zwei undotierte Randbereiche 6. 8, wie in Fig. 4 gezeigt ist.

Der Festkörper kann dann optisch beispielsweise durch eine Diodenlaserstrahlung gepumpt werden. Beim Pumpen ist es dann von fundamentaler Bedeutung, die Pumpanordnung so zu gestalten, daß eine homogene Pumpleistung in der xy-Ebene realisiert wird.

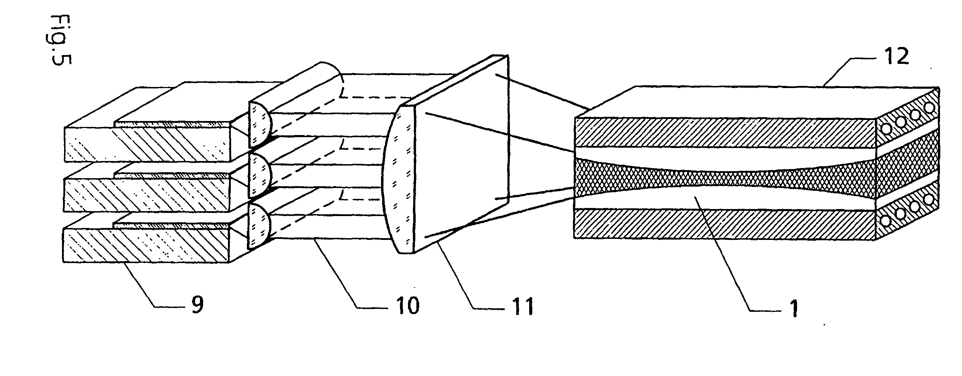

Fig. 5 zeigt eine weitere Ausführungsform der vorliegenden Erfindung, bei der ein Festkörper-Verstärkungsmedium durch eine Dioden-Laser-Anordnung 9 gepumpt wird. In Fig. 5 sind aus Vereinfachungsgründen die hochreflektierenden Spiegel 2, 3 sowie der von einem Oszillator ausgestrahlte zu verstärkende Laserstrahl 4 nicht dargestellt. Diese können jedoch wie in den Figuren 1a, 2 und 3a gezeigt angeordnet sein.

Wie in Fig. 5 gezeigt, wird die von der Dioden-Laser-Anordnung 9 emittierte Pumpstrahlung mindestens durch eine der Endflächen und im wesentlichen parallel zur z-Richtung in das Verstärkungsmedium 1 eingekoppelt. Dabei ist die Dioden-Laser-Anordnung 9 derart ausgestaltet, daß im Verstärkungsmedium 1 ein flacher gepumpter Kanal mit einem rechteckigen Querschnitt entsteht, dessen Dimension in der y-Richtung kleiner als die des Verstärkungsmediums ist. Diese Pumpanordnung ist aufgrund des verbesserten thermischen Verhaltens vorteilhaft und bietet weniger Möglichkeiten zur parasitären Oszillation.

Wird ein Festkörper als Verstärkungsmedium 1 verwendet, so sorgt die Kontaktkühlung 12 durch die beiden großen und parallel zur xz-Ebene stehenden Flächen für eine effektive Abführung der Verlustwärme, wie in Fig. 5 gezeigt ist.

Eine Homogenisierung der Dioden-Laser-Pumpstrahlung kann dadurch realisiert werden, daß sie in einen planaren Wellenleiter reinfokussiert wird und das Austrittsende des Wellenleiters durch eine Abbildungsoptik in das Verstärkungsmedium abgebildet wird. Der Querschnitt des planaren Wellenleiters wird dabei so orientiert, daß dessen große Dimension entlang der x-Richtung steht.

Die vorliegende Erfindung betrifft gemäß einer weiteren Ausgestaltung eine optische Verstärker-Anordnung, mit einem Verstärkungsmedium, welches einen näherungsweise rechteckigen Querschnitt mit einer langen Kante und einer kurzen Kante aufweist, sowie mindestens zwei hochreflektierenden Spiegeln, zwischen denen das Verstärkungsmedium angeordnet ist, wobei die lange bzw. die kurze Kante des Querschnitts entlang der x-Achse bzw. der y-Achse steht, die z-Achse die optische Achse ist und die x-, y- und z-Achse ein rechtwinkliges Koordinatensystem bilden, die Spiegel derart gestaltet und angeordnet sind, daß ein von einem Oszillator eingestrahlter zu verstärkender Strahl in der xz-Ebene mehrfach durch das Verstärkungsmedium durchläuft und verstärkt wird. und ein Hybrid-Resonator gebildet wird, der in der x-Richtung instabil und in der y-Richtung stabil ist, und bei der der Eingangsstrahl off-axis in das Verstärkungsmedium eingekoppelt wird, wobei die beiden hochreflektierenden Spiegel so dimensioniert sind, daß der Resonator in der yz-Ebene unter Mitwirkung der thermischen Linsenwirkung in dieser Ebene stabil ist.

Darüber hinaus betrifft die vorliegende Erfindung einen Laser-Oszillator mit einem Verstärkungsmedium, welches einen näherungsweise rechteckigen Querschnitt mit einer langen Kante und einer kurzen Kante aufweist, sowie mindestens zwei hochreflektierenden Spiegeln, zwischen denen das Verstärkungsmedium angeordnet ist, wobei die lange bzw. die kurze Kante des Querschnitts entlang der x-Achse bzw. der y-Achse steht, die z-Achse die optische Achse ist und die x-, y- und z-Achse ein rechtwinkliges Koordinatensystem bilden, die Spiegel derart gestaltet und angeordnet sind, daß ein Multipass-Resonator entsteht und ein Hybrid-Resonator gebildet wird, der in der x-Richtung instabil und in der y-Richtung stabil ist, wobei die beiden hochreflektierenden Spiegel so dimensioniert sind, daß der Resonator in der yz-Ebene unter Mitwirkung der thermischen Linsenwirkung in dieser Ebene stabil ist. Dabei ist der Resonator derart gestaltet, daß eine Laser-Oszillation stattfindet. Genauer gesagt, befindet sich die Verbindungslinie der Krümmungszentren der beiden Spiegel innerhalb der von den reflektierenden Spiegelbereichen eingeschlossenen Verstärkungszone.

Vorzugsweise ist bei der beschriebenen optischen Verstärker-Anordnung bzw. dem Laser-Oszillator der Resonator ausschließlich aufgrund der thermiscnen Linsenwirkung in der yz-Ebene stabil.

Die beschriebene optische Verstärker-Anordnung bzw. der Laser-Oszillator können dabei die in den Unteransprüchen definierten Merkmale aufweisen.

Obwohl die Erfindung in Bezug auf ihre bevorzugten Ausführungsformen beschrieben worden ist, ist selbstverständlich, daß der Schutzumfang durch die beigefügten Patentansprüche definiert ist.

**Patentansprüche**

1. Optische Verstärker-Anordnung; mit

   - einem Verstärkungsmedium (1), welches einen näherungsweise rechteckigen Querschnitt mit einer langen Kante und einer kurzen Kante aufweist,
   - sowie mindestens zwei hochreflektierenden Spiegeln (2, 3), zwischen denen das Verstärkungsmedium (1) angeordnet ist,
   - wobei die lange bzw. die kurze Kante des Querschnitts entlang der x-Achse bzw. der y-Achse steht, die z-Achse die optische Achse ist und die x-, y- und = Achse ein rechtwinkliges Koordinatensystem bilden,
   - die Spiegel (2, 3) derart gestaltet und angeordnet sind, daß ein von einem Oszillator eingestrahlter zu verstärkender Strahl (4) in der xz-Ebene mehrfach durch das Verstärkungsmedium durchläuft und verstärkt wird, und
   - die Abmessung des zu verstärkenden Strahls (4) in der x-Richtung nach jedem Durchgang größer wird

   wobei der Resonator in der yz-Ebene aufgrund der Wirkung mindestens einer zylindrischen Linse stabil ist.

2. Optische Verstärker-Anordnung nach Anspruch 1, die derart gestaltet ist, daß die Abmessung des zu verstärkenden Strahls in der x-Richtung nach jedem Durchgang mit einem konstanten Faktor größer wird.

3. Optische Verstärker-Anordnung nach Anspruch 1 oder 2, bei der die beiden Spiegel plane Spiegel (2, 3) sind, die unter einem Winkel $\beta$ zu einander angeordnet sind, der etwa dem Volldivergenzwinkel $\alpha$ des Eingangsstrahls (4) gleich ist.

4. Optische Verstärker-Anordnung nach einem der vorhergehenden Ansprüche, bei der die beiden Spiegel (2, 3) derart gestaltet und angeordnet sind, daß ein Hybrid-Resonator gebildet wird, der in der x-Richtung instabil und in der y-Richtung stabil ist, und bei der der Eingangsstrahl (4) off-axis in das Verstärkungsmedium (1) eingekoppelt wird.

5. Optische Verstärker-Anordnung nach Anspruch 4, bei der die beiden Spiegel (2, 3) zylindrische Spiegel mit Krümmungen in der xz-Ebene sind und der Resonator in der yz-Ebene aufgrund der thermischen Linsenwirkung in dieser Ebene stabil ist,

6. Optische Verstärker-Anordnung nach Anspruch 4 oder 5, bei der die beiden Spiegel (2, 3) so ausgebildet sind, daß sie in der xz-Ebene einen gemeinsamen Brennpunkt F haben und einen konfokalen instabilen Resonator bilden.

**7.** Optische Verstärker-Anordnung nach Anspruch 6, bei der der gemeinsame Brennpunkt außerhalb des Resonators liegt.

**8.** Optische Verstärker-Anordnung nach einem der vorhergehenden Ansprüche, ferner mit mindestens einer innerhalb des Resonators angeordneten Linse zur Strahlformung oder Gestaltung der Strahlgänge und des Modenvolumens.

**9.** Optische Verstärker-Anordnung nach Anspruch 8, bei der die mindestens eine innerhalb des Resonators angeordnete Linse eine in der yz-Ebene zylindrische Linse ist.

**10.** Optische Verstärker-Anordnung nach einem der Ansprüche 1 bis 9, mit Mitteln, die geeignet sind, den zu verstärkenden Strahl (4) vor Einkopplung in das Verstärkungsmedium so zu transformieren, daß dessen Kaustik der transversalen Mode des stabilen Resonators in der yz-Ebene entspricht.

**11.** Optische Verstärker-Anordnung nach einem der Ansprüche 6 bis 10, die derart gestaltet ist, daß die Taille des Eingangsstrahls (4) in dem gemeinsamen Brennpunkt der beiden Spiegel (2, 3) liegt.

**12.** Optische Verstärker-Anordnung nach einem der vorhergehenden Ansprüche, bei der das Verstärkungsmedium (1) ein Gasmedium ist.

**13.** Optische Verstärker-Anordnung nach einem der vorhergehenden Ansprüche, bei der das Verstärkungsmedium (1) ein Festkörpermedium ist.

**14.** Optische Verstärker-Anordnung nach Anspruch 13, bei der das Festkörpermedium eine Sandwich-Struktur mit mindestens einem dotierten Mittelbereich (7) und zwei undotierten Randbereichen (6, 8) aufweist.

**15.** Optische Verstärker-Anordnung nach Anspruch 13 oder 14, bei der das Festkörpermedium optisch gepumpt wird.

**16.** Optische Verstärker-Anordnung nach einem der Ansprüche 13 bis 15, bei der das Festkörpermedium mit Diodenlasern (9) gepumpt wird.

**17.** Optische Verstärker-Anordnung nach einem der Ansprüche 13 bis 16, bei der das Festkörpermedium mindestens durch eine Endfläche und im wesentlichen parallel zur z-Richtung gepumpt wird.

**18.** Optische Verstärker-Anordnung nach einem der Ansprüche 13 bis 16, bei der das Festkörpermedium mindestens durch eine Seitenfläche und im wesentlichen senkrecht zur z-Richtung gepumpt wird.

**19.** Optische Verstärker-Anordnung nach einem der Ansprüche 13 bis 18, bei der das Festkörpermedium einen flachen gepumpten Kanal mit einem rechteckigen Querschnitt aufweist, dessen Dimension in der y-Richtung kleiner als die des dotierten Festkörpermediums ist.

**20.** Optische Verstärker-Anordnung nach einem der Ansprüche 13 bis 19, bei der die optische(n) Pumpquelle(n) (9) so angeordnet ist (sind), daß eine näherungsweise homogene Pumpleistungsverteilung in der xy-Ebene vorliegt.

**21.** Optische Verstärker-Anordnung nach Anspruch 17, mit einem planaren Wellenleiter zur Homogenisierung der Pumpstrahlung hinsichtlich der Intensität in der xy-Ebene.

**Claims**

**1.** Optical amplifier arrangement with

- an amplifying medium (1), which has an approximately rectangular cross-section with a long edge and a short edge,
- as well as at least two highly reflective mirrors (2, 3), between which the amplifying medium (1) is arranged,
- wherein the long edge and the short edge of the cross-section stand along the x-axis and the y-axis respectively, the z-axis is the optical axis and the x-, y- and z-axes form a rectangular system of coordinates,
- the mirrors (2, 3) are configured and arranged in such a manner that a beam (4) to be amplified radiated from an oscillator passes through the amplifying medium several times in the xz-plane and is amplified, and
- the dimension of the beam (4) to be amplified increases in the x-direction after each passage

wherein the resonator is stable in the yz-plane as a result of the effect of at least one cylindrical lens.

**2.** Optical amplifier arrangement according to Claim 1, which is configured in such a manner that the dimension of the beam to be amplified increases at a constant factor in the x-direction after each passage.

**3.** Optical amplifier arrangement according to Claim 1 or 2, in which the two mirrors are plane mirrors (2, 3), which are arranged at an angle b to one another, said angle being approximately equal to the full divergence angle a of the entering beam (4).

4. Optical amplifier arrangement according to one ofthe preceding claims, in which the two mirrors (2, 3) are configured and arranged in such a manner that a hybrid resonator is formed, which is unstable in the x-direction and stable in the y-direction, and in which the entering beam (4) is fed into the amplifying medium (1) off-axis.

5. Optical amplifier arrangement according to Claim 4, in which the two mirrors (2, 3) are cylindrical mirrors with curvatures in the xz-plane and the resonator is stable in the yz-plane as a result of the thermal lens effect in this plane.

6. Optical amplifier arrangement according to Claim 4 or 5, in which the two mirrors (2, 3) are configured so that they have a common focus F in the xz-plane and form a confocal unstable resonator.

7. Optical amplifier arrangement according to Claim 6, in which the common focus lies outside the resonator.

8. Optical amplifier arrangement according to one of the preceding claims, additionally having at least one lens arranged inside the resonator for beam shaping or configuring the optical paths and mode volume.

9. Optical amplifier arrangement according to Claim 8, in which the at least one lens arranged inside the resonator is a lens that is cylindrical in the yz-plane.

10. Optical amplifier arrangement according to one of Claims 1 to 9, having means which are suitable for transforming the beam (4) to be amplified in such a way before being fed into the amplifying medium that its caustic corresponds to the transverse mode of the stable resonator in the yz-plane.

11. Optical amplifier arrangement according to one of Claims 6 to 10, which is configured in such a manner that the middle of the entering beam (4) lies in the common focus of the two mirrors (2, 3).

12. Optical amplifier arrangement according to one of the preceding claims, in which the amplifying medium (1) is a gas medium.

13. Optical amplifier arrangement according to one ofthe preceding claims, in which the amplifying medium (1) is a solid state medium.

14. Optical amplifier arrangement according to Claim 13, in which the solid state medium has a sandwich-type structure with at least one doped central region (7) and two undoped boundary regions (6, 8).

15. Optical amplifier arrangement according to Claim 13 or 14, in which the solid state medium is optically pumped.

16. Optical amplifier arrangement according to one of Claims 13 to 15, in which the solid state medium is pumped using diode lasers (9).

17. Optical amplifier arrangement according to one of Claims 13 to 16, in which the solid state medium is pumped at least through one end face and essentially parallel to the z-direction.

18. Optical amplifier arrangement according to one of Claims 13 to 16, in which the solid state medium is pumped at least through one side face and essentially perpendicular to the z-direction.

19. Optical amplifier arrangement according to one of Claims 13 to 18, in which the solid state medium has a shallow pumped duct with a rectangular cross-section, the dimension of which in the y-direction is smaller than that of the doped solid state medium.

20. Optical amplifier arrangement according to one of Claims 13 to 19, in which the optical pump source (s) (9) is (are) arranged such that there is an approximately homogeneous distribution of pumping power in the xy-plane.

21. Optical amplifier arrangement according to Claim 17, having a planar waveguide for homogenisation of the pumping radiation with respect to the intensity of the xy-plane.

**Revendications**

1. Dispositif amplificateur optique comportant :

   - un milieu amplificateur (1) ayant une section sensiblement rectangulaire avec un grand côté et un petit côté,
   - au moins deux miroirs très réfléchissants (2, 3) entre lesquels se trouve le milieu amplificateur (1),
   - le grand côté ou le petit côté de la section se situant suivant l'axe x ou l'axe y et l'axe z étant l'axe optique, les axes x, y, z formant un système de coordonnées rectangulaire,
   - les miroirs (2, 3) étant réalisés et installés pour qu'un faisceau (4) à amplifier, émis par un oscillateur, passe plusieurs fois dans le plan xz à travers le milieu amplificateur pour être amplifié, et

- la dimension du faisceau (4) à amplifier dans la direction x, augmente après chaque passage,

dans lequel le résonateur est stable dans le plan yz du fait de l'effet d'au moins une lentille cylindrique.

2. Dispositif amplificateur optique selon la revendication 1,
**caractérisé en ce que**
la dimension du faisceau à amplifier dans la direction x augmente selon un coefficient constant après chaque passage.

3. Dispositif amplificateur optique selon l'une quelconque des revendications 1 ou 2,
dans lequel
les deux miroirs sont des miroirs plans (2, 3) installés suivant un angle β l'un par rapport à l'autre, cet angle étant sensiblement égal à l'angle de divergence totale α du faisceau incident (4).

4. Dispositif amplificateur optique selon l'une quelconque des revendications précédentes,
dans lequel
les deux miroirs (2, 3) sont réalisés et installés pour former un résonateur hybride, instable dans la direction x et stable dans la direction y, et le faisceau incident (4) est injecté de manière désaxée dans le milieu amplificateur (1).

5. Dispositif amplificateur optique selon la revendication 4,
dans lequel
les deux miroirs (2, 3) sont des miroirs cylindriques avec des courbures dans le plan xz et le résonateur est stable dans le plan yz du fait de l'action de lentille thermique dans ce plan.

6. Dispositif amplificateur optique selon l'une quelconque des revendications 4 ou 5,
dans lequel
les deux miroirs (2, 3) sont réalisés de façon à avoir un foyer F commun dans le plan xz et former un résonateur instable, cofocal.

7. Dispositif amplificateur optique selon la revendication 6,
**caractérisé en ce que**
le foyer commun est situé en dehors du résonateur.

8. Dispositif amplificateur optique selon l'une quelconque des revendications précédentes,
dans lequel
au moins une lentille, à l'intérieur du résonateur, assure la formation du faisceau ou la mise en forme des chemins suivis par le faisceau et le volume du mode.

9. Dispositif amplificateur optique selon la revendication 8,
dans lequel
au moins une lentille dans le résonateur est une lentille cylindrique dans le plan yz.

10. Dispositif amplificateur optique selon l'une quelconque des revendications 1 à 9, comprenant des moyens permettant de transformer le faisceau (4) à amplifier, avant son injection dans le milieu amplificateur de façon que sa caustique correspond au mode transversal du résonateur stable dans le plan yz.

11. Dispositif amplificateur optique selon l'une quelconque des revendications 6 à 10, réalisé de façon que le point de rétrécissement (taille) du faisceau incident (4) se situe au foyer commun des deux miroirs (2, 3).

12. Dispositif amplificateur optique selon l'une quelconque des revendications précédentes,
dans lequel
le milieu amplificateur (1) est un milieu gazeux.

13. Dispositif amplificateur optique selon l'une quelconque des revendications précédentes,
dans lequel
le milieu amplificateur (1) est un corps solide.

14. Dispositif amplificateur optique selon la revendication 13,
dans lequel
le corps solide est une structure sandwich avec au moins une zone médiane dopée (7) et deux zones marginales non dopées (6, 8).

15. Dispositif amplificateur optique selon l'une quelconque des revendication 13 ou 14,
dans lequel
le corps solide subit un pompage optique.

16. Dispositif amplificateur optique selon l'une quelconque des revendication 13 à 15,
dans lequel
le corps solide est pompé par des diodes laser (9).

17. Dispositif amplificateur optique selon l'une quelconque des revendication 13 à 16,
dans lequel
le corps solide est pompé à travers au moins une surface d'extrémité et essentiellement de façon parallèle à la direction z.

18. Dispositif amplificateur optique selon l'une quelconque des revendication 13 à 16,

dans lequel

le corps solide est pompé à travers au moins une surface latérale et de façon essentiellement perpendiculaire à la direction z.

19. Dispositif amplificateur optique selon l'une quelconque des revendication 13 à 18,

dans lequel

le corps solide comporte un canal à section rectangulaire, plat, pompé, dont la dimension dans la direction y est inférieure à celle du corps solide dopé.

20. Dispositif amplificateur optique selon l'une quelconque des revendication 13 à 19,

dans lequel

la (ou les) source(s) de pompage optique (9) est (sont) installée(s) pour avoir une répartition pratiquement homogène de la puissance de pompage dans le plan xy.

21. Dispositif amplificateur optique selon la revendication 17, comportant un guide d'ondes planaire pour homogénéiser le rayonnement de pompage en intensité dans le plan xy.

Fig. 1a

Fig. 1b

Fig. 1c

Fig. 2

Fig. 3a

Fig. 3b

Fig. 4

Fig.5

Fig. 6